# EUROPÄISCHE PATENTSCHRIFT

(11) **EP 1 019 684 B1**
(45) Veröffentlichungstag und Bekanntmachung des Hinweises auf die Patenterteilung: **16.11.2005**
(21) Anmeldenummer: 98946205.6
(22) Anmeldetag: 09.10.1998
(51) Int. Cl.: G01G 3/14, G01G 19/02, G08G 1/01, G01L 1/22

(54) **KRAFTSENSOR**
FORCE SENSOR
CAPTEUR DE FORCE

(30) Priorität: 09.10.1997 CH 236597
(43) Veröffentlichungstag der Anmeldung: 19.07.2000
(73) Patentinhaber: Bourdon-Haenni Holding AG, 3303 Jegenstorf (CH)
(72) Erfinder: SCHEUTER, Felix, CH-3065 Bolligen (CH); MAURER, Christian, CH-3027 Bern (CH)
(74) Vertreter: Roshardt, Werner Alfred
(86) Internationale Anmeldenummer: PCT/CH1998/000435
(87) Internationale Veröffentlichungsnummer: WO 1999/019697

(56) Entgegenhaltungen:
- EP-A- 0 141 731
- EP-A- 0 218 465
- DE-B- 1 274 804
- DE-C- 4 140 068
- US-A- 2 392 293
- US-A- 4 422 889

## Beschreibung

### Technisches Gebiet

Die vorliegende Erfindung betrifft einen Kraftsensor und eine mit dem Kraftsensor versehene Kraftmesseinrichtung, die besonders zur Verwendung sowohl bei stationären als auch bei transportablen Radlastwaagen geeignet ist.

### Stand der Technik

Kraftsensoren (auch Kraftmesszellen genannt), die zum Messen einer punktförmig angreifenden Kraft oder einer Punktkraft geeignet sind, existieren in einer Vielzahl von verschiedenen Ausgestaltungen. Zur Verwendung insbesondere für Radlastwagen sind jedoch Kraftsensoren erwünscht, welche nicht eine punktförmig angreifende Kraft, sondern das Integral einer auf eine Linie oder auf eine Fläche einwirkenden Kraft messen.

Aus CH 667 329 (Haenni & Cie AG) ist eine Waage mit Kraftsensoren in Form von länglichen Hohlelementen bekannt, welche zum Messen einer linienförmig einwirkenden Kraft geeignet sind. Durch Aneinanderreihung mehrerer dieser Kraftsensoren kann die Waage gemäss CH 667 329 das Flächenintegral der auf eine Fläche einwirkenden Kraft messen. Zur Kraftmessung wird das Volumen einer Flüssigkeit gemessen, die durch die Kraft auf die elastischen Hohlelemente aus diesen verdrängt wird. Die Waage gemäss CH 667 329 ist zwar als Radlastwaage gut geeignet, ihre Herstellung ist jedoch konstruktiv aufwändig und relativ teuer.

In EP-A2-0 141 731 (SFERNICE SOCIETE FRANCAISE DE L'ELECTRO-RESISTANCE) wird ein Kraftsensor mit einem elastisch deformierbaren, länglichen Stab beschrieben, auf dessen Aussenseite eine Serie von Dehnungsmesselementen entlang von einer oder mehreren Schraubenlinien angeordnet sind. Die gegenüberliegenden Längsenden des Stabes sind zum Einspannen in zwei bezüglich einander beweglichen Organen ausgebildet, um die zwischen diesen beiden Organen wirkenden Biege-, Torsions- und Scherspannungen zu messen. Die zu messende Kraft sowie die Gegenkraft werden punktförmig an den Längsenden des Stabes eingeleitet. Zur Verwendung für Radlastwaagen, wo linienförmig oder flächenförmig einwirkende Kräfte gemessen werden müssen, ist der Kraftsensor gemäss EP-A2-0 141 731 nicht geeignet.

### Darstellung der Erfindung

Aufgabe der vorliegenden Erfindung ist die Bereitstellung eines insbesondere zum Messen der Radlasten von fahrenden Fahrzeugen geeigneten Kraftsensors, der unempfindlich gegen Umgebungseinflüsse wie Temperaturveränderungen, elektromagnetische Störungen usw. und einfach herzustellen ist, sowie einer mit dem Kraftsensor versehenen Kraftmesseinrichtung bzw. Waage.

Die Lösung der Aufgabe ist Gegenstand der unabhängigen Patentansprüche.

Der erfindungsgemässe Kraftsensor weist einen die zu messende Kraft aufnehmenden, elastisch deformierbaren Träger auf, an dem ein erstes und ein zweites Dehnungsmesselement derart angeordnet sind, dass die durch die Kraft verursachte elastische Deformation des Trägers zu unterschiedlichen Längendehnungen bei den beiden Dehnungsmesselementen führt. Dieser Längendehnungsunterschied dient als Mass für die zu messende Kraft.

Die erfindungsgemässe Lösung weist den Vorteil auf, dass störende Umgebungseinflüsse (z.B. in Form von Temperaturveränderungen), welche die beiden Dehnungsmesselemente in gleicher Weise beeinflussen, keine wesentliche Beeinträchtigung des Messresultats zur Folge haben, da zur Messung der Kraft nur die Differenz zwischen den Messwerten der beiden Dehnungsmesselemente, nicht aber deren Absolutwerte verwendet wird.

Vorzugsweise hat der Träger eine längliche Form und ist mit einer Seite im wesentlichen auf seiner ganzen Länge auf einer soliden, unnachgiebigen Unterlage aufliegend derart angeordnet, dass die zu messende Kraft im wesentlichen quer zur Trägerlängsrichtung und senkrecht zur Unterlage auf den Träger einwirkt, so dass der Träger in einer Richtung parallel zur Krafteinwirkung gestaucht und in einer Richtung senkrecht zur Krafteinwirkung und senkrecht zur Trägerlängsrichtung gedehnt wird. Die beiden Dehnungsmesselemente können derart am Träger angeordnet sein, dass die Stauchung im wesentlichen durch das erste Dehnungsmesselement und die Dehnung im wesentlichen durch das zweite Dehnungsmesselement gemessen werden.

Der Träger kann ein Rohr (Messrohr) mit im wesentlichen kreisförmigem Querschnitt aufweisen, in dessen Hohlraum als Überlastsicherung ein Stabelement mit im wesentlichen kreisförmigem Querschnitt aus einem festen Material angeordnet ist, wobei der Durchmesser des Stabelementes so bemessen ist, dass die Innenfläche des Messrohres bei Überbelastung des Kraftsensors vor Erreichen der Elastizitätsgrenze des Messrohres wenigstens teilweise an die Oberfläche des Stabelementes stösst, wodurch eine irreversible, plastische Verformung des Messrohres verhindert wird.

Bei einer bevorzugten Ausführungsart des erfindungsgemässen Kraftsensors sind das erste Dehnungsmesselement in Form einer zum Messrohr koaxialen ersten Quasi-Schraubenlinie und das zweite Dehnungsmesselement in Form einer koaxialen zweiten Quasi-Schraubenlinie um die Achse des Trägers herum verlaufend angeordnet, wobei die auf eine Normalebene zur Achse projizierten Formen der Quasi-Schraubenlinien je einen langen Durchmesser und einen kurzen Durchmesser aufweisen und der lange sowie der kurze Durchmesser der ersten Quasi-Schraubenlinie gegenüber dem langen respektive dem kurzen Durchmesser der zweiten Quasi-Schraubenlinie um einen Winkel geneigt sind. Vorzugsweise ist die Anordnung so, dass der Neigungswinkel zwischen dem langen Durchmesser der ersten Quasi-Schraubenlinie und dem langen Durchmesser der zweiten Quasi-Schraubenlinie einerseits sowie der Neigungswinkel zwischen dem kurzen Durchmesser der ersten Quasi-Schraubenlinie und dem kurzen Durchmesser der zweiten Quasi-Schraubenlinie andrerseits je im wesentlichen 90 ° messen. Vorteilhafterweise sind die beiden Quasi-Schraubenlinien nach Art eines zweigängigen Gewindes angeordnet.

Bei einer anderen Ausführungsart des erfindungsgemässen Kraftsensors ist das erste Dehnungsmesselement in einer ersten, entlang der Achse des Messrohres mäandrierenden, Linie angeordnet, wobei die erste Mäanderlinie im wesentlichen auf der Mantelfläche eines ersten Viertelsegmentes des zylindrischen Messrohres verläuft. Das zweite Dehnungsmesselement ist in einer zweiten, entlang der Achse des Messrohres mäandrierenden, Linie angeordnet, wobei die zweite Mäanderlinie im wesentlichen auf der Mantelfläche eines zweiten, an das erste Viertelsegment angrenzenden Viertelsegmentes des zylindrischen Messrohres verläuft. Die mäanderförmig angeordneten Dehnungsmesselemente verlaufen somit in Flächen entlang der Rohrachse, die im wesentlichen senkrecht zueinander stehen. Der Verlauf der Mäanderlinien kann zick-zack-förmig, sägezahnförmig, sinusförmig; halbkreisförmig, rechteckförmig oder in irgend einer anderen mäandrierenden Form ausgebildet sein. Weiter kann ein drittes Dehnungsmesselement in einer dritten Mäanderlinie im wesentlichen auf der Mantelfläche eines dritten, an das zweite Viertelsegment angrenzenden Viertelsegmentes und ein viertes Dehnungsmesselement in einer vierten Mäanderlinie im wesentlichen auf der Mantelfläche eines vierten Viertelsegmentes zwischen dem ersten und dem dritten Viertelsegment angeordnet sein. Bei dieser Anordnung mit vier Dehnungsmesselementen kann das erste seriell mit dem dritten und das zweite seriell mit dem vierten verbunden sein.

Bei einer zur Ausführungsform mit einem Träger, der mit einer Seite im wesentlichen auf seiner ganzen Länge auf einer soliden, unnachgiebigen Unterlage aufliegt, alternativen Ausführungsform der Erfindung weist der Träger eine mit ersten Rippen versehene Oberseite, eine zur Oberseite im wesentlichen parallele, mit zweiten Rippen versehene Unterseite, eine Linksseite und eine Rechtsseite auf. Die zweiten Rippen sind im wesentlichen parallel zu den ersten Rippen und in Bezug auf diese versetzt angeordnet. Das erste Dehnungsmesselement ist in der Rechtsseite des Trägers angeordnet und verläuft zick-zack-förmig zwischen der Oberseite und der Unterseite hin und her, wobei es jeweils von einer ersten Rippe an der Oberseite zur nächsten Rippe an der Unterseite, von dieser zur nächsten Rippe an der Oberseite, von dieser zur nächsten Rippe an der Unterseite usw. verläuft. Das zweite Dehnungsmesselement ist in der Linksseite des Trägers angeordnet und verläuft zick-zack-förmig zwischen der Oberseite und der Unterseite hin und her, wobei es jeweils von einer ersten Mitte zwischen zwei Rippen an der Oberseite zur nächsten Mitte zwischen zwei Rippen an der Unterseite, von dieser zur nächsten Mitte zwischen zwei Rippen an der Oberseite usw. verläuft. Bei einer im wesentlichen senkrecht zur Oberseite auf die ersten Rippen wirkenden Kraft wird der mit den zweiten Rippen auf einer unnachgiebigen Unterlage aufliegende Träger wellenförmig deformiert, wobei das erste Dehnungsmesselement gestaucht wird und das zweite Dehnungsmesselement gedehnt wird. Im Unterschied zu dem mit einer Seite im wesentlichen auf seiner ganzen Länge auf einer Unterlage aufliegenden Träger wird der bloss mit Rippen auf der Unterlage aufliegende Träger nicht bloss in seiner Querrichtung, sondern auch in seiner Längsrichtung deformiert.

Bei einer weiteren bevorzugten Ausführungsart des Kraftsensors sind die Dehnungsmesselemente in Nuten angeordnet, die in der Oberfläche des Trägers ausgebildet sind. Die Dehnungsmesselemente können mit einem elektrisch isolierenden Material in den Nuten vergossen sein. Bestehen die Dehnungsmesselemente aus einem gebräuchlichen Widerstandsdraht, so bietet das Vergiessen des Widerstandsdrahtes in einer Nut den Vorteil, dass mittels des Widerstandsdrahtes nicht nur eine Zugspannung sondern auch eine Druckspannung gemessen werden kann. Das Giessmaterial sorgt für eine Übertragung der Druckkräfte auf den Widerstandsdraht. lm Gegensatz dazu kann mittels eines freiliegenden Widerstandsdrahtes keine Druckspannung gemessen werden, weil der Draht den Druckkräften ausweicht. Will man trotzdem mit einem freiliegend in einer Nut angeordneten Widerstandsdraht nicht nur Dehnungen, sondern auch Stauchungen der Nut messen, so muss der Widerstandsdraht derart vorgespannt werden, dass er auch bei einer Stauchung der Nut stets noch einer Zugspannung ausgesetzt ist.

Vorzugsweise weisen die Dehnungsmesselemente einen elektrischen Leiter auf, der einen längendehnungsabhängigen elektrischen Widerstand hat. Als elektrischer Leiter kann beispielsweise ein gebräuchlicher elektrischer Widerstandsdraht verwendet werden, wobei als Material für den Widerstandsdraht Konstantan bevorzugt wird. Zum Messen des elektrischen Widerstandsverhältnisses vom ersten zum zweiten elektrischen Leiter als Mass für die zu messende Kraft weist der erfindungsgemässe Kraftsensor vorzugsweise eine Wheatstonesche Brückenschaltung auf. Diese Ausführungsart des erfindungsgemässen Kraftsensors hat eine äusserst kurze Reaktionszeit, was sich insbesondere bei der Messung der Radlasten von fahrenden Fahrzeugen als Vorteil erweist.

Bei einer weiteren bevorzugten Ausführungsart der Erfindung sind der Träger und die Dehnungsmesselemente in einem hermetisch abschliessbaren Überrohr angeordnet, das vorzugsweise aus einem elektrisch leitenden Material besteht. Der Kraftsensor gemäss dieser Ausführungsart der Erfindung ist besonders gut gegen äussere Einflüsse wie Temperaturveränderungen, Erschütterungen, elektromagnetische Störungen, Feuchtigkeit, Verschmutzung usw. geschützt.

Die erfindungsgemässe Kraftmesseinrichtung weist einen oder mehrere erfindungsgemässe Kraftsensoren auf. Vorzugsweise weist die Kraftmesseinrichtung wenigstens zwei Kraftsensoren auf mit je einem ersten und einem zweiten Dehnungsmesselement, die je einen elektrischen Leiter mit längendehnungsabhängigem elektrischem Widerstand aufweisen, und eine einzige Wheatstonesche Brückenschaltung, wobei für die Bestimmung der auf die Kraftsensoren wirkenden Gesamtkraft mittels der Wheatstoneschen Brückenschaltung die elektrischen Leiter der ersten Dehnungsmesselemente in einer ersten Serieschaltung und die elektrischen Leiter der zweiten Dehnungsmesselemente in einer zweiten Serieschaltung angeordnet sind.

Bei einer bevorzugten Ausführungsart der vorliegenden Erfindung weist eine Radlastwaage eine erfindungsgemässe Kraftmesseinrichtung auf, wobei der eine oder die elastisch deformierbaren Träger im wesentlichen gerade und längs zur Fahrtrichtung des zu wägenden Rades angeordnet sind. Die Radlastwaage gemäss dieser Ausführungsart der Erfindung kann eine Koppelungsvorrichtung zur Koppelung mit weiteren koppelbaren Radlastwaagen aufweisen. Dadurch können mehrere dieser Radlastwaagen miteinander gekoppelt werden, um z.B. eine ganze Fahrbahnbreite abzudecken, ohne dass bei den Koppelungsstellen Verfälschungen des Messresultats und/oder Totbereiche entstehen.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen eine bevorzugte Ausführungsform der vorliegenden Erfindung dar. Es zeigen:
- Fig. 1: einen Kraftsensor gemäss einer ersten bevorzugten Ausführungsform der Erfindung in einer Teilansicht von der Seite;
- Fig. 2: einen Querschnitt durch den Träger des Kraftsensors aus Fig. 1;
- Fig. 3: einen Längsschnitt durch einen Teil des Trägers des Kraftsensors aus Fig. 1;
- Fig. 4: einen Kraftsensor gemäss einer zweiten bevorzugten Ausführungsform der Erfindung in einer perspektivischen Teilansicht.

Grundsätzlich sind in den Figuren gleiche Teile mit gleichen Bezugszeichen versehen.

### Wege zur Ausführung der Erfindung

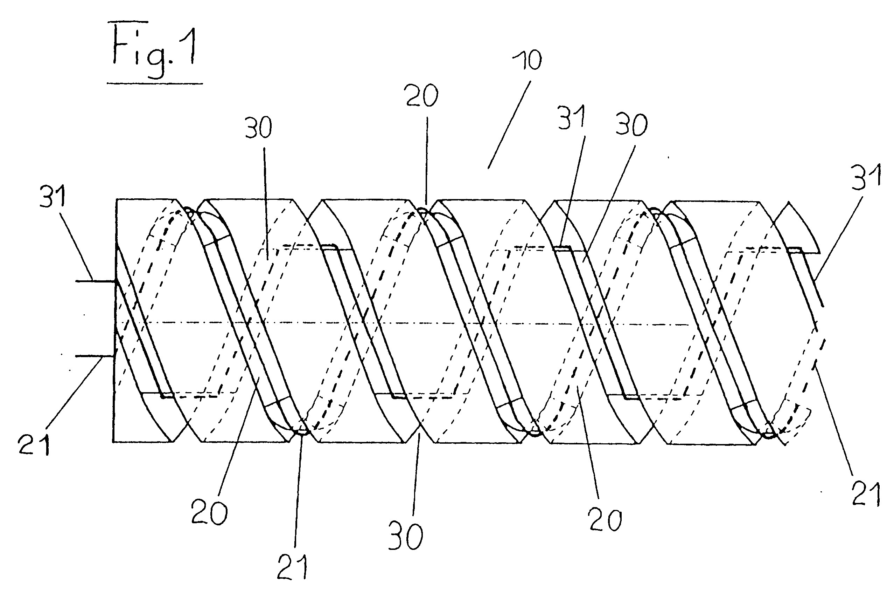

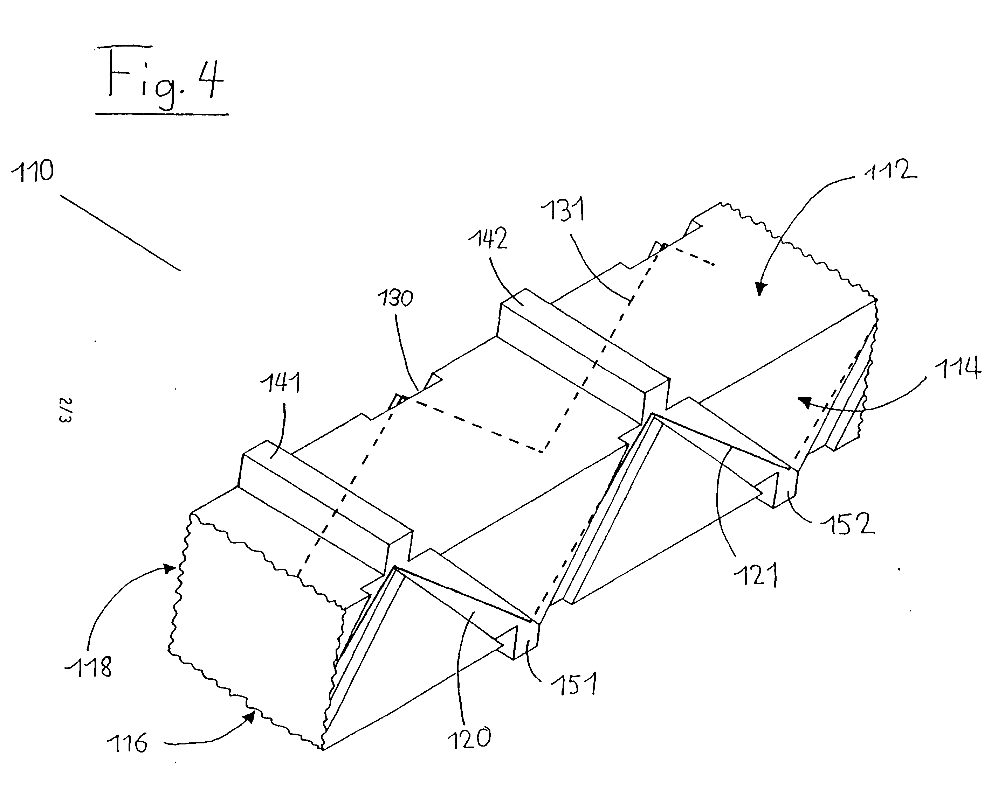

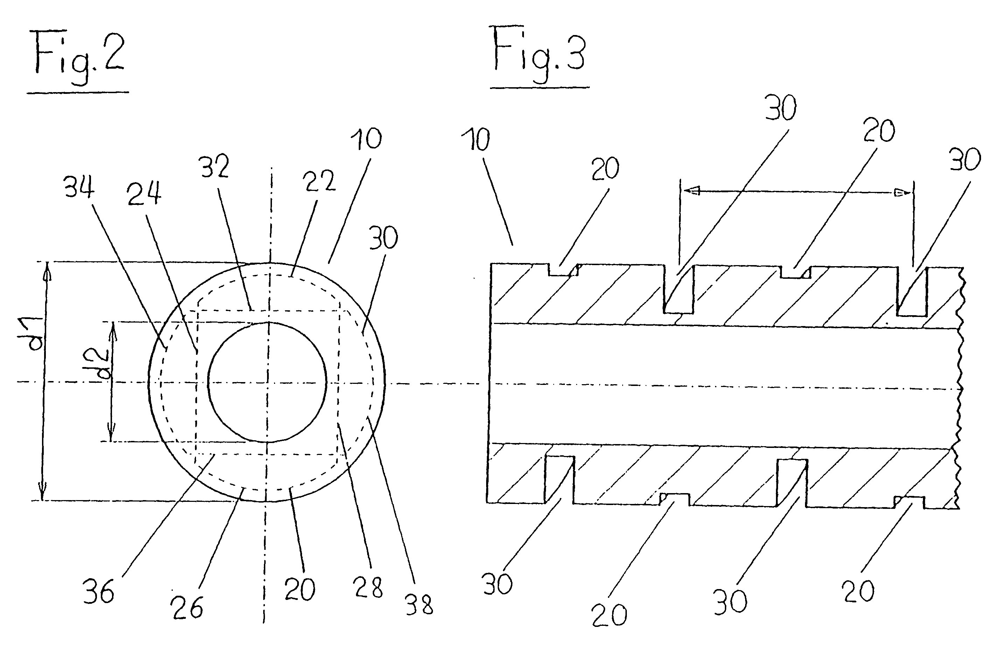

In der Figur 1 ist eine erste bevorzugte Ausführungsart eines erfindungsgemässen Kraftsensors in einer Teilansicht von der Seite dargestellt. Der Kraftsensor weist einen die Kraft aufnehmenden, elastisch deformierbaren Träger 10 auf, an welchem ein erstes und ein zweites Dehnungsmesselement 21, 31 angeordnet sind. Der Träger 10 besteht vorzugsweise aus Metall, grundsätzlich sind jedoch auch andere elastische Materialien verwendbar. Die Dehnungsmesselemente 21, 31 bestehen je aus einem Widerstandsdraht aus Konstantan, der vorzugsweise mit einem elektrisch isolierenden Mantel versehen ist. Es können jedoch auch Widerstandsdrähte aus anderen Materialien oder andere Dehnungsmesselemente, z.B. Dehnmessstreifen, verwendet werden. lm Querschnitt der Figur 2 sowie im Längsschnitt der Figur 3 sind der Übersichtlichkeit halber jeweils bloss der Träger 10 ohne die an ihm angeordneten Widerstandsdrähte 21, 31 dargestellt.

Der Träger 10 hat im wesentlichen die Form eines länglichen Rohres, im folgenden Messrohr genannt, mit kreisförmigem Querschnitt und einem Innendurchmesser d2 sowie einem Aussendurchmesser d1. Die Widerstandsdrähte 21 und 31 sind in Nuten 20 bzw. 30 angeordnet, welche auf der Aussenseite in der Rohrwandung ausgebildet sind. Die Nuten 20, 30 werden vorzugsweise durch Fräsen der Rohrwandung gebildet und sind quasi-schraubenlinienförmig, nach Art der Gewindegänge eines zweigängigen Gewindes einer Schraube angeordnet, wobei die Basislinien der Nuten 20. 30, d.h. die Linien der tiefsten Stellen der Nuten, in der Querschnittprojektion auf eine Ebene senkrecht zur Rohrachse quasi-rechteckförmig sind, dies im Gegensatz zu den üblichen Gewindegängen von Schrauben mit kreisförmigem Querschnitt. In der Seitenansicht der Figur 1 sind die Nuten 20, 30 und die Widerstandsdrähte 21, 31 auf der sichtbaren Seite des Kraftsensors mit durchgehenden Linien und auf der verdeckten Seite mit unterbrochenen Linien dargestellt. Die Widerstandsdrähte 21, 31 sind im wesentlichen auf den Basislinien in den Nuten 20, 30 angeordnet. Die Steigung der schraubelnlinienförmigen Nuten wird vorzugsweise so gewählt, dass der Abstand in Richtung der Rohrachse zwischen zwei benachbarten Windungen einer Nut ungefähr gleich dem Aussendurchmesser d1 des Messrohres 10 ist.

Die in Figur 2 erkennbare Querschnittprojektion der Basislinie der Nut 20 besteht aus den beiden geraden vertikalen Linien 24 und 28 sowie den beiden bogenförmigen, im wesentlichen horizontalen Linien 22 und 26, die in Form eines Quasi-Rechtecks angeordnet sind. Die vertikale Ausdehnung des Quasi-Rechtecks 22, 24, 26, 28 ist wesentlich grösser als seine horizontale Ausdehnung, weil sich einerseits die beiden geraden vertikalen Linien 24, 28 über eine vertikale Distanz erstrecken, die grösser ist als die horizontale Distanz, über welche sich die beiden bogenförmigen Linien 22, 26 erstrecken. Andrerseits sind zusätzlich die bogenförmigen Linien 22, 26 bezüglich des Quasi-Rechtecks 22, 24, 26, 28 nach aussen gebögen, so dass die vertikale Ausdehnung des Quasi-Rechtecks entlang seiner vertikalen Mittellinie noch grösser ist als bei seinen Ecken. Die Querschnittprojektion der Basislinie der Nut 20 weist somit insgesamt die Form eines hochkant stehenden Quasi-Rechtecks mit geraden, vertikalen Längsseiten 24, 28 und bogenförmigen, im wesentlichen horizontalen Schmalseiten 22. 26 auf, das auf einer seiner bogenförmig nach aussen gekrümmten Schmalseiten steht.

lm Gegensatz dazu weist die ebenfalls in Figur 2 erkennbare Querschnittprojektion der Basislinie der Nut 30 die Form eines auf seiner Längsseite stehenden Quasi-Rechtecks auf mit geraden, horizontalen Längsseiten 32, 36 und bogenförmigen, im wesentlichen vertikalen Schmalseiten 34, 38. Die horizontale Ausdehnung des Quasi-Rechtecks 32. 34, 36, 38 ist wesentlich grösser als seine vertikale Ausdehnung, weil sich einerseits die beiden geraden horizontalen Linien 32, 36 über eine horizontale Distanz erstrecken, die grösser ist als die vertikale Distanz, über welche sich die beiden bogenförmigen Linien 34, 38 erstrecken. Andrerseits sind zusätzlich die bogenförmigen Linien 34, 38 bezüglich des Quasi-Rechtecks 32, 34, 36, 38 nach aussen gebogen, so dass die horizontale Ausdehnung des Quasi-Rechtecks entlang seiner horizontalen Mittellinie noch grösser ist als bei seinen Ecken.

Das Messrohr 10 des Kraftsensors liegt auf einer soliden Unterlage (nicht dargestellt), die jegliche Durchbiegung des Messrohres 10 (in Rohrlängsrichtung) infolge von Krafteinwirkungen im wesentlichen verhindert. Wenn nun eine Kraft im wesentlichen vertikal von oben und senkrecht zur Rohrlängsachse auf den Kraftsensor einwirkt, so wird der rohrförmige Träger 10 in vertikaler Richtung gestaucht und in horizontaler Richtung quer zur Rohrlängsachse ausgedehnt. Dadurch wird der Widerstandsdraht 21 in der Nut 20. der in Form einer Wicklung mit einem hohem Querschnitt um das Messrohr 10 herum angeordnet ist, insgesamt gestaucht, so dass seine Länge abnimmt, wogegen der Widerstandsdraht 31 in der Nut 30, der in Form einer Wicklung mit breitem Querschnitt um das Messrohr 10 herum angeordnet ist, insgesamt gestreckt wird, so dass seine Länge zunimmt. Somit verändern die beiden Widerstandsdrähte 21, 31 ihren elektrischen Widerstand gegensinnig. Gemessen wird also die Stauchung und Dehnung des Messrohres 10 in einer Ebene senkrecht zur Rohrlängsrichtung. Dabei spielt es keine Rolle, an welchen Stellen entlang der Rohrlänge die zu messende Kraft oder die zu messenden Kräfte auf das Messrohr einwirken, das Messsignal ist vielmehr stets eine Funktion der über die gesamte Rohrlänge aufintegrierten vertikalen Kraftkomponenten der zu messenden äusseren Kräfte.

Das Widerstandsverhältnis der beiden Widerstandsdrähte 21, 31 wird mittels einer Wheatstonesche Brückenschaltung gemessen und dient als Mass für die Summe der im wesentlichen vertikal auf den Kraftsensor einwirkenden äusseren Kräfte. Die Reaktionszeit von Kraftsensoren gemäss dieser Ausführungsart der Erfindung ist kurz genug, dass bei Anwendungen dieser Kraftsensoren in Radlastwaagen die benötigte Zeit zum Messen der Radlasten von fahrenden Fahrzeugen ausreicht, um selbst bei Fahrgeschwindigkeiten von 33 m/s (120 km/h) eine mehrfache Sicherheit betreffend der Ansprechgeschwindigkeit der Radlastwaage zu gewährleisten.

Die Widerstandsdrähte 21, 31 sind in den Nuten 20, 30 nicht lose angeordnet, vielmehr ist der Zwischenraum zwischen den Widerstandsdrähten 21, 31 und den Rändern der Nuten 20, 30 zum Schutz gegen Verschmutzung und/oder gegen Verschiebungen der Widerstandsdrähte mit einem vorzugsweise elektrisch isolierenden Füllmaterial ausgegossen. Als geeignetes Füllmaterial zum Vergiessen der Widerstandsdrähte 21, 31 in den Nuten 20, 30 hat sich Epoxiharz erwiesen.

Das Messrohr 10 weist in seinem Innenraum mit dem Durchmesser d2 als Überlastsicherung ein Stabelement (nicht dargestellt) aus einem festen Material auf. Das Stabelement hat einen im wesentlichen kreisförmigem Querschnitt, dessen Durchmesser so bemessen ist, dass die Innenfläche des Messrohres 10 bei Überbelastung des Kraftsensors vor Erreichen der Elastizitätsgrenze des Messrohres 10 wenigstens teilweise an die Oberfläche des Stabelementes stösst. Dadurch wird eine inelastische Verformung des Messrohres 10 verhindert, so dass bei der Messung von Kräften das Messrohr 10 nur im linearen Bereich unterhalb der Streckgrenze (Hook'sche Gerade) deformiert wird. Vorzugsweise wird bei der Herstellung des Kraftsensors zunächst das Stabelement in das Messrohr 10 eingeführt, dann der Kraftsensor einer grossen Überbelastung auf seiner ganzen Länge ausgesetzt und anschliessend nach der Entlastung die Nullpunkteinstellung des Messrohres vorgenommen. Das Messrohr 10 weist dann nach der grossen Überbelastung eventuell bereits eine kleine plastische Verformung auf, die jedoch bei der anschliessenden Nullpunkteinstellung berücksichtigt wird. Bei späteren Überbelastungen, die nicht wesentlich über das Mass der ersten Überbelastung hinaus gehen, tritt dann keine zusätzliche plastische Verformung und somit auch keine Dejustierung des Kraftsensors mehr ein.

Zum Schutze gegen äussere Störeinflüsse ist das Messrohr 10 mitsamt den Widerstandsdrähten 21, 31 in einem hermetisch abschliessbaren Überrohr (nicht dargestellt) angeordnet. Wenn das schützende Überrohr aus einem elektrisch leitenden Material, z.B. Metall, besteht, wirkt es wie ein Faradaykäfig. Der Kraftsensor ist dann einerseits gegen äussere Einflüsse in Form von elektromagnetischen Störungen und andrerseits (aufgrund des hermetisch abgeschlossenen Überrohres) gegen Feuchtigkeit, Verschmutzung usw. geschützt. Bei einer Ausführungsform der Erfindung besteht das Überrohr aus dem gleichen metallischen Material wie das Messrohr 10. Damit das Überrohr möglichst keine Kräfte aufnimmt, was die Kraftmessungen des Kraftsensors verfälschen würde, ist die Rohrwandung des Überrohres ungefähr zehn mal dünner als jene des Messrohres 10. Zudem weist das Überrohr nicht einen kreisförmigen, sondern einen ellipsenförmigen Querschnitt auf, wobei die Nebenachse der Ellipse in Richtung der zu messenden Kraft angeordnet ist. Vorzugsweise wird zur Herstellung des Kraftsensors zunächst ein Überrohr mit kreisförmigem Querschnitt und einem Innendurchmesser, der grösser ist als der Aussendurchmesser d1 des Messrohres 10, auf seiner ganzen Länge soweit zusammengepresst, dass die Nebenachse des nun ellipsenförmigen Rohrquerschnittes geringfügig kleiner ist als der Aussendurchmesser d1 des Messrohres 10. Anschliessend wird das Messrohr 10 so in das Überrohr hinein geschoben, das die Nebenachse in Richtung der durch den Kraftsensor zu messenden Kräfte zu liegen kommt. Beim Einschieben des Messrohres 10 wird das Überrohr geringfügig aufgeweitet: damit ist eine sichere und gleichmässige Berührung zwischen dem Überrohr und dem Messrohr gewährleistet. Die Steifigkeit des Überrohres mit zehnfach dünnerer Rohrwandung und ellipsenförmigern Querschnitt macht weniger als 1% der Steifigkeit des Messrohres aus, wodurch eine durch das Überrohr verursachte Verfälschung der Kraftmessung weitgehend vermieden wird

Der Kraftsensor gemäss der in den Figuren 1 bis 3 dargestellten Ausführungsform der Erfindung weist den Vorteil auf, dass er gegen störende Umgebungseinflüsse weitgehend immun ist. Temperaturveränderungen und andere äussere Einflüsse wie z.B. Zug-, Druck- und/oder Scherungskräfte in Rohrlängsrichtung, Scherungskräfte quer zur Rohrlängsrichtung usw. beeinflussen die beiden Dehnungsmesselemente in gleicher Weise und haben keine wesentliche Beeinträchtigung des Messresultats zur Folge, da zur Messung der Kraft nur die Differenz zwischen den Messwerten der beiden Dehnungsmesselemente, nicht aber deren Absolutwerte verwendet wird. Durch die Möglichkeit, das Messrohr 10 mitsamt den Widerstandsdrähten 21, 31 in einem hermetisch abgeschlossenen Überrohr anzuordnen, kann der Kraftsensor wirksam gegen Schmutz, Feuchtigkeit und andere Umgebungseinflüsse geschützt werden, wodurch eine gutes Langzeitverhalten des Kraftsensors erreichbar ist.

In der Figur 4 ist ein Kraftsensor gemäss einer zweiten bevorzugten Ausführungsform der Erfindung in einer perspektivischen Teilansicht dargestellt. Der Kraftsensor weist einen die Kraft aufnehmenden, elastisch deformierbaren Träger 110 auf, an welchem ein erstes Dehnungsmesselement 121 und ein zweites Dehnungsmesselement 131 angeordnet sind. Der Träger 10 besteht vorzugsweise aus Metall, grundsätzlich sind jedoch auch andere elastische Materialien verwendbar. Die Dehnungsmesselemente 121, 131 bestehen je aus einem Widerstandsdraht aus Konstantan, der vorzugsweise mit einem elektrisch isolierenden Mäntel versehen ist. Es können jedoch auch Widerstandsdrähte aus anderen Materialien oder andere Dehnungsmesselemente, z.B. Dehnmessstreifen, verwendet werden.

Der Träger 110 hat im wesentlichen die Form eines länglichen Quaders mit einem rechteckigen Querschnitt und weist eine Oberseite 112. eine Unterseite 116. eine Rechtsseite 114 sowie eine Linksseite 116 auf. Die beiden Stirnseite des Trägers 110 sind in der Teilansicht der Figur 4 nicht dargestellt.

Die Oberseite 112 des Trägers 110 ist mit ersten, nach oben vorstehenden Rippen 141, 142 versehen, die in regelmässigem Abstand und parallel zueinander, quer zur Trägerlängsrichtung, angeordnet sind. Die Unterseite 116 des Trägers 110 ist mit zweiten, nach unten vorstehenden Rippen 151. 152 versehen, die in regelmässigem Abstand wiederum quer zur Trägerlängsrichtung und parallel zu den zweiten Rippen angeordnet sind. Die zweiten Rippen 151. 152 sind in Bezug auf die ersten Rippen 141, 142 derart versetzt angeordnet, dass jeweils eine zweite Rippe 151 unterhalb der Mitte zwischen zwei ersten Rippen 141, 142 zu liegen kommt.

Der erste Widerstandsdraht 121 ist in einer ersten Nut 120 angeordnet, die in der Rechtsseite 114 des Trägers 110 ausgebildet ist. Die erste Nut 120 verläuft zick-zack-förmig zwischen der Oberseite 112 und der Unterseite 116 hin und her, wobei sie jeweils von einer ersten Rippe 141 an der Oberseite 112 zur nächsten Rippe 151 an der Unterseite 116, von dieser zur nächsten Rippe 142 an der Oberseite 112, von dieser zur nächsten Rippe 152 an der Unterseite 116 usw. verläuft.

Der zweite Widerstandsdraht 131 ist in einer zweiten Nut 130 angeordnet, die in der Linksseite 118 des Trägers 110 ausgebildet ist. Die zweite Nut 130 verläuft zick-zack-förmig zwischen der Oberseite 112 und der Unterseite 116 hin und her, wobei sie jeweils von der Mitte zwischen zwei Rippen 141, 142 an der Oberseite 112 zur nächsten Mitte zwischen zwei Rippen 151, 152 an der Unterseite 116, von dieser zur nächsten Zwischenrippenmitte an der Oberseite 112 usw. verläuft. In einer Projektion parallel zu den Rippen bilden die beiden Nuten 120, 130 somit zwei sich ständig kreuzende Zick-Zack-Linien.

Der Träger 110 liegt mit seinen zweiten Rippen 151, 152 auf einer soliden, unnachgiebigen Unterlage (nicht dargestellt) auf. Die zu messende Kraft wirkt im wesentlichen vertikal von oben (d.h. senkrecht zur Oberseite 112 des Trägers 110) auf die ersten Rippen 141, 142 an der Oberseite 112 des Trägers 110. Dadurch wird der Träger 110 wellenförmig derart deformiert, dass die erste Nut 120 (und somit der erste Widerstandsdraht 121) gestaucht werden, während die zweite Nut 130 (und somit der zweite Widerstandsdraht 131) gedehnt werden. Die Auswertung der an den beiden Widerstandsdrähten 121, 131 abgegriffenen Widerstandssignale erfolgt in analoger Weise wie bei der in den Figuren 1 bis 3 dargestellten Ausführungsart der Erfindung

Bei einer zur in Figur 4 dargestellten ähnlichen Variante der Erfindung hat der Träger die Form eines Doppel-T-Trägers mit einem Obergurt, einem Untergurt und einem den Obergurt mit dem Untergurt verbindenden Steg. Analog zu der in Figur 4 dargestellten Ausführungsform sind der Obergurt und der Untergurt mit versetzt zueinander angeordneten Querrippen versehen. Die Widertandsdrähte verlaufen freihängend in Zickzacklinien zwischen dem Obergurt und dem Untergurt. Deshalb müssen die Widerstandsdrähte derart vorgespannt werden, dass sie auch bei einer Stauchung stets noch unter Zugspannung stehen.

Eine erfindungsgemässe Kraftmesseinrichtung oder Waage (nicht dargestellt), die insbesondere zum Messen der Radlasten von fahrenden oder ruhenden Fahrzeugen geeignet ist, weist mehrere erfindungsgemässe Kraftsensoren auf. Die rohrförmigen Kraftsensoren sind parallel zueinander zwischen einer die Unterlage für die Kraftsensoren bildenden, im wesentlichen horizontalen Grundplatte und einer die Messfläche bildenden, im wesentlichen vertikalen Deckplatte angeordnet, so dass mit der Radlastwaage die Summe sämtlicher senkrecht auf die Messfläche wirkenden Kräfte gemessen wird. Die Widerstandsdrähte der hohen und der breiten Wicklung von jedem Kraftsensor sind in serieller Art mit den entsprechenden Wicklungsdrähten der übrigen Kraftsensoren verbunden, so dass mit einer einzigen Wheatstoneschen Brückenschaltung die gesamte senkrecht auf die Messfläche wirkende Kraft gemessen werden kann.

Bei einer Ausführungsform der erfindungsgemässen Radlastwaage sind sämtliche Messrohre der Kraftsensoren parallel zueinander und in Fahrtrichtung der zu wägenden Räder angeordnet, zudem ist die Radlastwaage mit einer Koppelungsvorrichtung zur seitlichen Koppelung quer zur Fahrtrichtung mit weiteren koppelbaren Radlastwaagen versehen. Dadurch können mehrere dieser Radlastwaagen miteinander gekoppelt werden, um z.B. eine ganze Fahrbahnbreite abzudecken, ohne dass bei den Koppelungsstellen Verfälschungen des Messresultats und/oder Totbereiche entstehen. Mittels einer über eine ganze Fahrbahnbreite angeordneten Reihe von solchen Radtastwaagen lassen sich die Radlasten von vorbeifahrenden Fahrzeugen zuverlässig messen, unabhängig davon, an welcher Stelle innerhalb der Fahrbahnbreite die Fahrzeuge vorbeifahren.

Zusammenfassend ist festzustellen, dass durch die Erfindung ein insbesondere zum Messen der Radlasten von fahrenden Fahrzeugen geeigneter Kraftsensor bereit gestellt wird, der unempfindlich gegen äussere Einflüsse wie Temperaturveränderungen, Erschütterungen, elektromagnetische Störungen und Verschmutzung ist und eine kurze Messzeit zum Durchführen einer Messung benötigt, sowie eine mit dem Kraftsensor versehene Kraftmesseinrichtung.

## Patentansprüche

1. Kraftsensor, mit einem die zu messende Kraft aufnehmenden, elastisch deformierbaren, länglichen Träger (10; 110), einem ersten Dehnungsmesselement (21, 121) und einem zweiten Dehnungsmesselement (31, 131), **dadurch gekennzeichnet, dass** die Dehnungsmesselemente (21, 31; 121; 131) derart am Träger (10, 110) angeordnet sind, dass - wenn der Träger auf einer soliden, unnachgiebigen Unterlage aufliegend angeordnet ist und die zu messende Kraft im Wesentlichen quer zur Trägerlängsrichtung und senkrecht zur Unterlage auf den Träger (10, 110) einwirkt, - eine elastische Deformation des Trägers (10; 110) derart verursacht wird, dass das erste Dehnungsmesselement (21, 121) gestaucht und das zweite Dehnungsmesselement (31, 131) gedehnt wird, wobei entweder
der Träger (10) im Wesentlichen auf seiner ganzen Länge auf der soliden, unnachgiebigen Unterlage aufliegend angeordnet ist, so dass der Träger (10) durch die zu messende Kraft in einer Richtung parallel zur Krafteinwirkung gestaucht und in einer Richtung senkrecht zur Krafteinwirkung und senkrecht zur Trägerlängsrichtung gedehnt wird, wobei die Stauchung im Wesentlichen durch das erste Dehnungsmesselement und die Dehnung im Wesentlichen durch das zweite Dehnungsmesselement gemessen werden, oder
der Träger (110) eine mit ersten Rippen (141, 142) versehene Oberseite (112), eine zur Oberseite (112) im Wesentlichen parallele, mit zweiten Rippen (151, 152) versehene Unterseite (116), eine Linksseite (118) und eine Rechtsseite (114) aufweist, wobei der Träger mit den zweiten Rippen (151, 152) auf der unnachgiebigen Unterlage aufliegt, wobei die zweiten Rippen (151, 152) im Wesentlichen parallel zu den ersten Rippen (141, 142) und in Bezug auf diese derart versetzt angeordnet sind, dass der Träger (110) durch die im Wesentlichen senkrecht zur Oberseite (112) auf die ersten Rippen (141, 142) wirkende Kraft wellenförmig deformiert wird, und wobei das erste Dehnungsmesselement (121) in der Rechtsseite (114) zick-zack-förmig von den ersten Rippen (141, 142) zu den zweiten Rippen (151, 152) verläuft und das zweite Dehnungsmesselement (131) in der Linksseite (118) zick-zack-förmig von den Mitten zwischen den ersten Rippen (141, 142) zu den Mitten zwischen den zweiten Rippen (151, 152) verläuft.

2. Kraftsensor nach der ersten Alternative des Anspruchs 1, **dadurch gekennzeichnet, dass** der Träger ein Messrohr (10) mit im Wesentlichen kreisförmigem Querschnitt aufweist, in dessen Hohlraum als Überlastsicherung ein Stabelement mit im Wesentlichen kreisförmigem Querschnitt aus einem festen Material angeordnet ist, wobei der Durchmesser des Stabelementes so bemessen ist, dass die Innenfläche des Messrohres (10) bei Überbelastung des Kraftsensors vor Erreichen der Elastizitätsgrenze des Messrohres (10) wenigstens teilweise an die Oberfläche des Stabelementes stösst.

3. Kraftsensor nach der ersten Alternative des Anspruchs 1 oder Anspruch 2, **dadurch gekennzeichnet, dass** das erste Dehnungsmesselement (21) in Form einer zur Längsachse des Trägers (10) koaxialen ersten Quasi-Schraubenlinie (20) und das zweite Dehnungsmesselement (31) in Form einer koaxialen zweiten Quasi-Schraubenlinie (30) um die Trägerachse herum verlaufend angeordnet sind, wobei die Formen der Quasi-Schraubenlinien (20, 30) in einer achsenparallelen Projektion auf eine Normalebene der Achse je einen langen Durchmesser und einen kurzen Durchmesser aufweisen und der lange sowie der kurze Durchmesser der ersten Quasi-Schraubenlinie (20) gegenüber dem langen respektive dem kurzen Durchmesser der zweiten Quasi-Schraubenlinie (30) um einen Winkel geneigt sind.

4. Kraftsensor nach Anspruch 3, **dadurch gekennzeichnet, dass** die beiden Quasi-Schraubenlinien (20, 30) nach Art eines zweigängigen Gewindes angeordnet sind.

5. Kraftsensor nach der ersten Alternative des Anspruchs 1 oder Anspruch 2, **dadurch gekennzeichnet, dass** das erste Dehnungsmesselement in einer ersten, entlang der Achse des Trägers mäandrierenden, Linie angeordnet ist, wobei die erste Mäanderlinie im Wesentlichen auf der Mantelfläche eines ersten Viertelsegmentes des Trägers verläuft, und das zweite Dehnungsmesselement in einer zweiten, entlang der Achse des Trägers mäandrierenden, Linie angeordnet ist, wobei die zweite Mäanderlinie im Wesentlichen auf der Mantelfläche eines zweiten, an das erste Viertelsegment angrenzenden Viertelsegmentes des Trägers verläuft.

6. Kraftsensor nach einem der Ansprüche 1 bis 5, **dadurch gekennzeichnet, dass** die Dehnungsmesselemente (21, 31; 121, 131) in auf der Oberfläche des Trägers (10; 110) ausgebildeten Nuten (20, 30; 120, 130) angeordnet sind.

7. Kraftsensor nach Anspruch 6, **dadurch gekennzeichnet, dass** die Dehnungsmesselemente (21, 31; 121, 131) mit einem elektrisch isolierenden Material in den Nuten (20, 30; 120; 130) vergossen sind.

8. Kraftsensor nach einem der Ansprüche 1 bis 7, **dadurch gekennzeichnet, dass** die Dehnungsmesselemente (21, 31; 121, 131) einen elektrischen Leiter (21, 31; 121, 131) mit längendehnungsabhängigem elektrischem Widerstand aufweisen.

9. Kraftsensor nach Anspruch 8, **dadurch gekennzeichnet, dass** die elektrischen Leiter (21, 31; 121, 131) aus Widerstandsdraht gebildet sind, der im Wesentlichen aus Konstanten besteht.

10. Kraftsensor nach Anspruch 8 oder 9, **gekennzeichnet durch** eine Wheatstonesche Brückenschaltung zur Messung des elektrischen Widerstandsverhältnisses vom ersten (21; 121) zum zweiten (31; 131) elektrischen Leiter als Mass für die Kraft.

11. Kraftsensor nach einem der Ansprüche 1 bis 10, **dadurch gekennzeichnet, dass** der Träger (10; 110) und die Dehnungsmesselemente (21, 31; 121, 131) in einem hermetisch abschliessbaren Überrohr angeordnet sind.

12. Kraftmesseinrichtung, insbesondere Waage, wobei die Kraftmesseinrichtung wenigstens einen Kraftsensor nach einem der Ansprüche 1 bis 11 umfasst.

13. Kraftmesseinrichtung nach Anspruch 12, **dadurch gekennzeichnet, dass** die Kraftmesseinrichtung wenigstens zwei Kraftsensoren hat mit je einem ersten (21; 121) und einem zweiten (31; 131) Dehnungsmesselement, die je einen elektrischen Leiter (21, 31; 121, 131) mit längendehnungsabhängigem elektrischem Widerstand aufweisen, und eine einzige Wheatstonesche Brückenschaltung, wobei für die Bestimmung der auf die Kraftsensoren wirkenden Gesamtkraft mittels der Wheatstoneschen Brückenschaltung die elektrischen Leiter der ersten Dehnungsmesselemente in einer ersten Serieschaltung und die elektrischen Leiter der zweiten Dehnungsmesselemente in einer zweiten Serieschaltung angeordnet sind.

14. Radlastwaage mit Kraftmesseinrichtung nach Anspruch 12 oder 13, **dadurch gekennzeichnet, dass** der eine oder die elastisch deformierbaren Träger (10; 110) im Wesentlichen gerade sind und längs zur Fahrtrichtung des zu wägenden Rades angeordnet sind.

15. Radlastwaage nach Anspruch 14, **gekennzeichnet durch** eine Koppelungsvorrichtung zur Koppelung mit weiteren koppelbaren Radlastwaagen.

## Claims

1. Force sensor with an elastically deformable elongated carrier (10; 110), which absorbs the force to be measured, a first strain measurement element (21, 121) and a second strain measurement element (31, 131), **characterised in that** the strain measurement elements (21, 31; 121, 131) are arranged on the carrier (10, 110) such that - when the carrier is arranged resting on a solid, unyielding base and the force to be measured acts essentially transversely to the lengthwise direction of the carrier and perpendicular to the base on the carrier (10, 110), - elastic deformation of the carrier (10; 110) is caused such that the first strain measurement element (21, 121) is compressed and the second strain measurement element (31, 131) is stretched, wherein either
the carrier (10) being arranged lying essentially over its entire length on the solid unyielding base, such that due to the force to be measured the carrier (10) is compressed in a direction parallel to the direction of force and is stretched in a direction perpendicular to the direction of force and perpendicular to the lengthwise direction of the carrier, wherein the compression is essentially measured by the first strain measurement element and the stretching is essentially measured by the second strain measurement element, or
the carrier (110) having a top (112) which is provided with first ribs (141, 142), a bottom (116) which is provided with second ribs (151, 152) and which is essentially parallel to the top (112), a left side (118) and a right side (114), the carrier lying with the second ribs (151, 152) on the unyielding base, the second ribs (151, 152) being arranged essentially parallel to the first ribs (141, 142) and being offset with reference to them such that the carrier (110) is deformed in an undulatory manner by the force acting essentially perpendicularly to the top (112) on the first ribs (141, 142), the first strain measurement element (121) on the right side (114) running in a zig-zag from the first ribs (141, 142) to the second ribs (151, 152), the second strain measurement element (131) on the left side (118) running in a zig-zag from the middles between the first ribs (141, 142) to the middles between the second ribs (151, 152).

2. Force sensor as claimed in the first alternative of claim 1, **characterised in that** the carrier has a measurement tube (10) with a substantially circular cross section, in its cavity as overload protection there is a rod element with an essentially circular cross section of a solid material, the diameter of the rod element being dimensioned such that the inner surface of the measurement tube (10) strikes at least partially the surface of the rod element when the force sensor is overloaded before reaching the elastic limit of the measurement tube (10).

3. Force sensor as claimed in the first alternative of claim 1 or claim 2, **characterised in that** the first strain measurement element (21) in the form of a first quasi-helical line (20) which is coaxial to the lengthwise axis of the carrier (10) and the second strain measurement element (31) in the form of a coaxial second quasi-helical line (30) are arranged to run around the axis of the carrier, the shapes of the quasi-helical lines (20, 30) in an axially parallel projection onto a plane normal to the axis each having a long diameter and a short diameter, and the long and the short diameter of the first quasi-helical line (20) being sloped by an angle relative to the long respective short diameter of the second quasi-helical line (30).

4. Force sensor as claimed in claim 3, **characterised in that** the two quasi-helical lines (20, 30) are arranged in the manner of a two-start thread.

5. Force sensor as claimed in the first alternative of claim 1 or claim 2, **characterised in that** the first strain measurement element is arranged in a first line which meanders along the axis of the carrier, the first line running essentially on the jacket surface of a first quarter segment of the carrier, and the second strain measurement element is arranged in a second line which meanders along the axis of the carrier, the second line running essentially on the jacket surface of a second quarter segment of the carrier, wherein the second quarter segment adjoins the first quarter segment.

6. Force sensor as claimed in one of claims 1 to 5, **characterised in that** the strain measurement elements (21, 31; 121, 131) are arranged in grooves (20, 30; 120, 130) formed in the surface of the carrier (10; 110).

7. Force sensor as claimed in claim 6, **characterised in that** the strain measurement elements (21, 31; 121, 131) are sealed with an electrically insulating material in the grooves (20, 30; 120, 130).

8. Force sensor as claimed in one of claims 1 to 7, **characterised in that** the strain measurement elements (21, 31; 121, 131) comprise an electrical conductor (21, 31; 121, 131) which has electrical resistance which is dependent on the elongation.

9. Force sensor as claimed in claim 8, **characterised in that** the electrical conductors (21, 31; 121, 131) are made from resistance wire which consists essentially of contantan.

10. Force sensor as claimed in claim 8 or 9, **characterised in** further comprising a Wheatstone bridge circuit for measuring the electrical resistance ratio from the first (21; 121) to the second (31; 131) electrical conductor as a measure of force.

11. Force sensor as claimed in one of claims 1 to 10, **characterised in that** the carrier (10; 110) and the strain measurement elements (21, 31; 121, 131) are located in a hermetically sealable overtube.

12. Force measurement means, especially scales, the force measurement means comprising at least one force sensor as claimed in one of claims 1 to 11.

13. Force measurement means as claimed in claim 12, **characterised in that** the force measurement means has at least two force sensors with one first (21; 121) and one second (31; 131) strain measurement element each, which each have one electrical conductor (21, 31; 121, 131) with an electrical resistance which is dependent on the elongation, and one single Wheatstone bridge circuit, for determination of the total force which acts on the force sensors by means of the Wheatstone bridge circuit the electrical conductors of the first strain measurement elements being arranged in a first series connection and the electrical conductors of the second strain measurement elements being arranged in a second series connection.

14. Wheel load scales with a force measurement means as claimed in claim 12 or 13, **characterised in that** one or more of the elastically deformable carriers (10; 110) are essentially straight and are arranged lengthwise to the direction of travel of the wheels to be weighed.

15. Wheel load scales as claimed in claim 14, **characterised by** a coupling device for coupling to other connectable wheel load scales.

## Revendications

1. Capteur de force comportant un support allongé (10; 110) déformable élastiquement, qui reçoit la force à mesurer, un premier élément extensométrique (21, 121) et un second élément extensométrique (31, 131), **caractérisé en ce que** les éléments extensométriques (21, 31; 121; 131) sont disposés sur le support (10, 110) de telle sorte que - lorsque le support est disposé à plat sur une base solide non flexible et que la force à mesurer agit essentiellement transversalement par rapport à la direction longitudinale du support et perpendiculairement à la base sur le support (10, 110) - une déformation élastique du support (10, 110) est provoquée de telle sorte que le premier élément extensométrique (21, 121) est comprimé et le second élément extensométrique (31, 131) est dilaté, et dans lequel
soit le support (10) est disposé à plat, essentiellement sur toute sa longueur, sur la base solide non flexible de telle sorte que le support (10) est comprimé par la force à mesurer dans une direction parallèle à l'action de force et est dilaté dans une direction perpendiculaire à l'action de force et perpendiculairement à la direction longitudinale du support, la compression étant mesurée essentiellement par le premier élément extensométrique et la dilatation étant mesurée essentiellement par le second élément extensométrique,
soit le support (110) comporte une face supérieure (112) qui est pourvue de premières nervures (141, 142), une face inférieure (116) essentiellement parallèle à la face supérieure (112) et pourvue de secondes nervures (151, 152), un côté gauche (118) et un côté droit (114) et dans lequel le support s'appuie par les secondes nervures (151, 152) sur le support non flexible, les secondes nervures (151, 152) sont essentiellement parallèles aux premières nervures (141, 142) et sont disposées en étant décalées par rapport à ces dernières de telle sorte que le support (110) est déformé avec une forme ondulée par la force qui agit essentiellement perpendiculairement à la face supérieure (112) sur les premières nervures (141, 142), et le premier élément extensométrique (121) s'étend sur le côté droit (114) avec une forme en zigzag depuis les premières nervures (141, 142) jusqu'aux secondes nervures (151, 152) et le second élément extensométrique (131) s'étend sur le côté gauche (118) selon une forme en zigzag à partir des centres entre les premières nervures (141, 142) jusqu'aux centres entre les secondes nervures (151, 152).

2. Capteur de force selon la première variante de la revendication 1, **caractérisé en ce que** le support possède un tube de mesure (10) ayant une section transversale de forme essentiellement circulaire, dans la cavité duquel est disposé, en tant que système de sécurité contre une surcharge, un élément en forme de barreau possédant une section transversale de forme essentiellement circulaire et formé d'un matériau rigide, le diamètre de l'élément en forme de barreau étant dimensionné de telle sorte que la surface intérieure du tube de mesure (10) touche au moins partiellement la surface de l'élément en forme de barreau lors d'une surcharge du capteur de force avant que soit atteinte la limite d'élasticité du tube de mesure (10).

3. Capteur de force selon la première variante de la revendication 1 ou la revendication 2, **caractérisé en ce que** le premier élément extensométrique (21), sous la forme d'une première ligne quasi-hélicoïdale (20) coaxiale à l'axe longitudinal du support (10), et le second élément extensométrique (31), sous la forme d'une seconde ligne quasi-hélicoïdale coaxiale (30), sont disposés de manière à s'étendre autour de l'axe du support, et que les formes des lignes quasi-hélicoïdales (20, 30) possèdent, dans une projection parallèle à l'axe sur un plan normal à l'axe, respectivement un long diamètre et un court diamètre et que le long diamètre et le court diamètre de la première ligne quasi-hélicoïdale (20) sont inclinés d'un angle par rapport au long diamètre ou au court diamètre de la seconde ligne quasi-hélicoïdale (30).

4. Capteur de force selon la revendication 3,
**caractérisé en ce que** les deux lignes quasi-hélicoïdales (20, 30) sont disposées à la manière d'un filetage à deux filets.

5. Capteur de force selon la première variante de la revendication 1 ou la revendication 2, **caractérisé en ce que** le premier élément extensométrique est disposé sur une première ligne, qui est sinueuse le long de l'axe du support, la première ligne sinueuse s'étendant essentiellement sur la surface enveloppe d'un premier segment d'un quart du support et que le second élément extensométrique est disposé sur une seconde ligne, qui possède une forme sinueuse le long de l'axe du support, la seconde ligne sinueuse s'étendant essentiellement sur la surface enveloppe d'un second segment d'un quart du support, qui jouxte le premier segment d'un quart de segment.

6. Capteur de force selon l'une des revendications 1 à 5, **caractérisé en ce que** les éléments extensométriques (21, 31; 121, 131) sont disposés le long des rainures (20, 30; 120, 130) formées dans la surface du support (10; 110).

7. Capteur de force selon la revendication 6,
**caractérisé en ce que** les éléments extensométriques (21, 31; 121, 131) sont coulés avec un matériau électriquement isolant dans les rainures (20, 30; 120, 130).

8. Capteur de force selon l'une des revendications 1 à 7, **caractérisé en ce que** les éléments extensométriques (21, 31; 121, 131) possèdent un conducteur électrique (21, 31; 121, 131) comportant une résistance électrique qui dépend de l'étendue en longueur.

9. Capteur de force selon la revendication 8,
**caractérisé en ce que** les conducteurs électriques (21, 31; 121, 131) sont formés par un fil résistif, qui est constitué essentiellement par du constantan.

10. Capteur de force selon la revendication 8 ou 9, **caractérisé par** un circuit en pont de Wheatstone pour la mesure du rapport de la résistance du premier conducteur électrique (21; 121) à celle du second conducteur électrique (31; 131) en tant que mesure pour la force.

11. Capteur de force selon l'une des revendications 1 à 10, **caractérisé en ce que** le support (10; 110) et les éléments extensométriques (21, 31; 121, 131) sont disposés dans un tube enveloppe pouvant être fermé hermétiquement.

12. Dispositif de mesure de force, notamment balance, dans lequel le dispositif de mesure de force comprend au moins un capteur de force selon au moins l'une des revendications 1 à 11.

13. Dispositif de mesure de force selon la revendication 12, **caractérisé en ce que** le dispositif de mesure de force comporte au moins deux capteurs de force possédant chacun un premier élément extensométrique (21; 121) et un second élément extensométrique (31; 131), qui possèdent respectivement un conducteur électrique (21, 31; 121, 131) ayant une résistance électrique, qui dépend de l'étendue en longueur, et un seul circuit en pont de Wheatstone et pour la détermination de la force totale agissant sur les capteurs de force, au moyen du circuit en pont de Wheatstone, les conducteurs électriques des premiers éléments extensométriques sont disposés selon un premier circuit série et les conducteurs électriques des seconds éléments extensométriques sont disposés selon un second circuit série.

14. Balance de mesure de charge de roue, comportant un dispositif de mesure de force selon la revendication 12 ou 13, **caractérisée en ce que** le support ou les supports élastiquement déformables (10; 110) sont essentiellement rectilignes et sont disposés le long de la direction de déplacement de la roue devant être pesée.

15. Balance de mesure de charge de roue, selon la revendication 14, **caractérisée par** un dispositif de couplage servant à réaliser le couplage à d'autres balances de mesure de charge de roues, pouvant être couplées.
